# EUROPÄISCHE PATENTSCHRIFT

(11) **EP 1 349 425 B1**
(45) Veröffentlichungstag und Bekanntmachung des Hinweises auf die Patenterteilung: **12.11.2008**
(21) Anmeldenummer: 03005942.2
(22) Anmeldetag: 17.03.2003
(51) Int. Cl.: H04R 25/00

(54) **Platzierung eines elektroakustischen Miniaturwandlers in einem Hörgerät**
Positioning of a miniature electroacoustic transducer in a hearing aid
Positionnement d'un transducteur miniature électroacoustique dans une prothèse auditive

(30) Priorität: 28.03.2002 DE 10214187
(43) Veröffentlichungstag der Anmeldung: 01.10.2003
(73) Patentinhaber: Siemens Audiologische Technik GmbH, 91058 Erlangen (DE)
(72) Erfinder: Gebert, Anton, 91077 Kleinsendelbach (DE); Heerlein, Markus, 97318 Kitzingen (DE)
(74) Vertreter: Maier, Daniel Oliver

(56) Entgegenhaltungen:
- CH-A- 539 375
- GB-A- 2 096 863
- US-A1- 2001 036 289

## Beschreibung

Die Erfindung betrifft die Lagerung eines elektroakustischen Miniaturwandlers mit einem Gehäuse und einer in der Gehäusevorderseite angeordneten Schalldurchlassöffnung in einem Gerät, insbesondere in einem Hörhilfegerät. Ferner betrifft die Erfindung einen elektroakustischen Miniaturwandler.

Elektroakustische Miniaturwandler werden zur Wandlung elektrischer in akustische Signale sowie zur Wandlung akustischer in elektrische Signale verwendet. In zahlreichen Anwendungsbereichen, wie beispielsweise bei Telefonen oder Hörhilfegeräten, wird ein akustisches Signal von einem akustischelektrischen Miniaturwandler (Mikrofon) aufgenommen und weiterverarbeitet und ein akustisches Signal von einem elektrisch-akustischen Miniaturwandler (Hörer) abgegeben. Um Rückkopplungen zu vermeiden, muss verhindert werden, dass der abgegebene Schall des Hörers vom Mikrofon aufgenommen wird. Das Maß der Dämpfung zwischen Hörer und Mikrofon bestimmt nämlich die maximal mögliche Verstärkung des Geräts. Gelangt beispielsweise bei einem Hörhilfegerät der Schalldruck des Hörers um 60 dB gedämpft in das Mikrofon, wird es bei einer Verstärkung um 60 dB zum Rückkopplungspfeifen kommen.

Bei elektroakustischen Geräten existiert neben der direkten Schallübertragung vom Hörer zum Mikrofon noch ein zweiter, parasitärer Weg der Signalübertragung. So kann der Hörer außer direkt über die Luft auch durch Vibrationen des Hörer-Gehäuses Schall abstrahlen. Umgekehrt nimmt auch das Mikrofon über sein Gehäuse Körperschall auf. Im Beispiel des Hörhilfegeräts verringert auch dieser parasitäre Weg der Schallübertragung zwischen Hörer und Mikrofon die Dämpfung und begrenzt damit die maximal erreichbare Verstärkung.

Zur Erhöhung der Dämpfung wird versucht, Hörer und Mikrofon räumlich möglichst voneinander zu separieren. Dies ist jedoch z.B. bei Hörhilfegeräten durch die angestrebte Miniaturisierung der Geräte nur begrenzt möglich. Zur Begrenzung der direkten Schallübertragung durch die Luft vom Hörer zum Mikrofon eines Hörhilfegerätes wird daher der Schall vom Hörer über einen Schallkanal in den Gehörgang des Hörgeräteträgers geleitet, wobei der Gehörgang nach außen durch das Hörgerätegehäuse oder eine Otoplastik abgedichtet ist.

Aus der DE 100 43 201 C1 ist ein elektroakustischer Miniaturwandler mit einem Gehäuse und einer Schalldurchlassöffnung bekannt, der auch in einem Hörhilfegerät verwendet werden kann. Neben dem Gehäuse des Miniaturwandlers ist ein zweites Gehäuse vorhanden, das den Miniaturwandler umgibt. Dabei ist der Miniaturwandler über einen zylindrischen Stutzen in Verbindung mit einem Gummischlauch in dem zweiten Gehäuse fixiert.

Aus der DE 36 14 739 A1 ist eine elastische Lagerung für einen in einem Hörgerät anzubringenden Hörer bekannt, bei der auf einen Schallaustrittsstutzen des Hörers eine elastische Buchse aufgesteckt und in eine Öffnung des Hörgerätegehäuses eingeknöpft ist.

Die Druckschrift US 2001/0036289 A1 offenbart die Anordnung eines in einem Hörgerät elastisch gelagerten elektroakustischen Miniaturwandlers.

Aufgabe der vorliegenden Erfindung ist es, eine einfach zu realisierende Lagerung eines elektroakustischen Miniaturwandlers anzugeben, bei der die Aufnahme bzw. Abstrahlung von Schall über das Gehäuse des elektroakustischen Miniaturwandlers reduziert ist. Ferner ist es Aufgabe der Erfindung, einen für diese Lagerung geeigneten elektroakustischen Miniaturwandler anzugeben.

Erfindungsgemäß wird diese Aufgabe bei einer Lagerung eines elektroakustischen Miniaturwandlers mit einem Gehäuse und einer in der Gehäusevorderseite angeordneten Schalldurchlassöffnung in einem Gerät, insbesondere in einem Hörhilfegerät, dadurch gelöst, dass ein erstes sowie ein zweites elastisches Halteelement vorhanden sind, wobei das erste elastische Halteelement lediglich in einem zentralen Bereich der Gehäusevorderseite und das zweite elastische Halteelement lediglich in einem zentralen Bereich der der Gehäusevorderseite gegenüberliegenden Gehäuserückseite an dem Gehäuse des elektroakustischen Miniaturwandlers befestigt ist und wobei sich die elastischen Halteelemente entlang ihres äußeren Randes entweder direkt an einer in dem Gerät vorhandenen Aufnahme abstützen oder an einer den elektroakustischen Miniaturwandler umgebenden Hülse abstützen und diese Hülse mit einer in dem Gerät vorhandenen Aufnahme verbunden ist.

Ferner wird die Aufgabe bei einem elektroakustischen Miniaturwandler mit einem Gehäuse, ausgebildet zur Lagerung in einem Gerät, insbesondere in einem Hörhilfegerät, gelöst durch ein erstes sowie ein zweites elastisches Halteelement, wobei das erste elastische Halteelement lediglich in einem zentralen Bereich der Gehäusevorderseite und das zweite elastische Halteelement lediglich in einem zentralen Bereich der der Gehäusevorderseite gegenüberliegenden Gehäuserückseite an dem Gehäuse des elektroakustischen Miniaturwandlers befestigt ist, wobei der elektroakustische Miniaturwandler von einer Hülse umgeben ist und wobei sich die elastischen Halteelemente entlang ihres äußeren Randes an der Hülse abstützen.

Bei der Lagerung gemäß der Erfindung sind an der Gehäusevorderseite sowie an der Gehäuserückseite des elektroakustischen Miniaturwandlers schwingungsdämpfende elastische Halteelemente angeordnet. Diese sind lediglich in einem zentralen Bereich der betreffenden Gehäuseseite an dem Miniaturwandlergehäuse befestigt. Es kann sich dabei sowohl um eine lösbare Verbindung handeln, z.B. um eine Steckverbindung mit den dafür notwendigen Mitteln, sowie um eine nicht lösbare Verbindung, z.B. durch Kleben. Das elastische Halteelement ist vorzugsweise so beschaffen, dass es in mit dem Gehäuse des elektroakustischen Miniaturwandlers verbundenem Zustand dieses Gehäuse zumindest teilweise überragt. So kann der elektroakustische Miniaturwandler bei der Montage des betreffenden Gerätes einfach in den dafür vorgesehenen Hohlraum in dem Gerät eingeschoben werden, insbesondere auch dann wenn eine den Hohlraum bildende Wand den elektroakustischen Miniaturwandler umschließt. Die elastischen Halteelemente sorgen dann für die Fixierung des elektroakustischen Wandlers in dem Hohlraum und zugleich für den notwendigen Abstand zwischen dem Wandlergehäuse und der den Hohlraum umgebenden Wand.

Zur Lagerung des elektroakustischen Miniaturwandlers in einem Gerät können die elastischen Halteelemente auch direkt mit entsprechend geformten Aufnahmen in dem Gerät verbunden sein. Ein durch Wandlerelemente, die das Hörergehäuse umschließen, gebildeter Hohlraum ist damit nicht notwendig. Dabei ist sowohl eine lösbare als auch eine feste Verbindung zwischen den Halteelementen und den Aufnahmen denkbar. Vorzugsweise besteht eine lösbare formschlüssige Verbindung, so dass der elektroakustische Miniaturwandler auf einfache Weise in das Gehäuse eingefügt und ebenso leicht auch wieder daraus entnommen werden kann.

Weiterhin ist es möglich, dass der elektroakustische Miniaturwandler von einer Hülse umgeben ist und die elastischen Halteelemente zur Lagerung des elektroakustischen Miniaturwandlers mit dieser Hülse zusammenwirken. Der elektroakustische Miniaturwandler kann dann zusammen mit der Hülse als Baueinheit in das jeweilige Gerät eingefügt werden.

Die Erfindung bietet den Vorteil, dass der wirksame Bereich des elastischen Halteelements im Vergleich zu einer aus dem Stand der Technik bekannten, das Miniaturwandlergehäuse umgebenden dämpfenden Hülle wesentlich vergrößert ist. Insbesondere bei Hörhilfegeräten ist wegen der angestrebten Miniaturisierung der zur Verfügung stehende Raum für den elektroakustischen Miniaturwandler eng begrenzt. Daher kann diese aus dem Stand der Technik bekannte Hülle lediglich verhältnismäßig dünn ausgeführt sein. Durch die Befestigung des elastischen Halteelements gemäß der Erfindung im Zentrum der Gehäusevorder- bzw. Gehäuserückseite wird erreicht, dass die Ausdehnung des schwingungsdämpfenden Bereiches wesentlich erweitert ist. Die effektive "Dicke" des schwingungsdämpfenden elastischen Halteelements ergibt sich hier nämlich aus der Distanz zwischen der Befestigungsstelle am Wandlergehäuse und dem Gerät bzw. der Hülse. Dadurch sind die schwingungsdämpfenden Eigenschaften der Lagerung deutlich verbessert.

Weitere Einzelheiten und Vorteile der Erfindung werden nachfolgend anhand der in der Zeichnung dargestellten Ausführungsbeispiele näher erläutert. Dabei zeigen:
Figur 1 einen in ein Hörhilfegerät eingesetzten Hörer und
Figur 2 eine Baueinheit mit einem Hörer und einer den Hörer umgebenden Hülse.

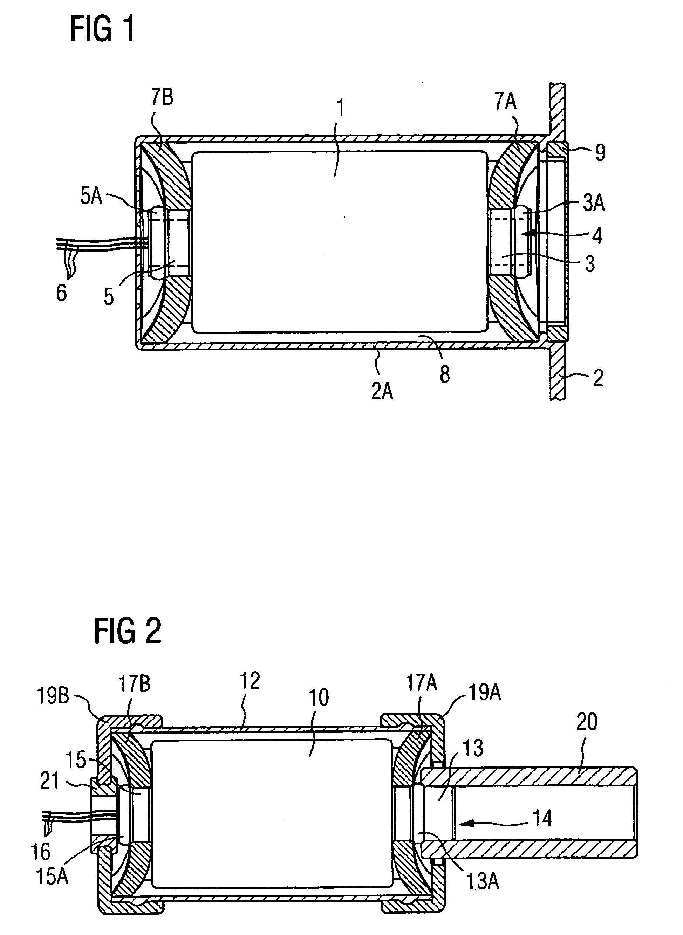

Figur 1 zeigt einen als Hörer 1 ausgeführten elektroakustischen Miniaturwandler, der in einem Hörhilfegerät angeordnet ist. Von dem Hörhilfegerät ist lediglich ein kleiner Ausschnitt dargestellt. Es ist dies ein Teil 2 der Oberfläche des Hörhilfegerätegehäuses sowie eine Wand 2A, die einen Hohlraum innerhalb des Hörgerätegehäuses bildet. Der Hörer 1 befindet sich innerhalb des durch die Wand 2A gebildeten Hohlraumes.

Die Wand 2A ist ebenso wie das Hörgerätegehäuse 2 vorteilhaft in einem stereolithographischen Verfahren bzw. in einem Laser-Sinter-Prozess hergestellt. Bei diesen insbesondere für die Fertigung von IdO-Gehäuseschalen (IdO = In dem Ohr Hörgerät) bekannten Verfahren wird ein Ohrabdruck mit einem hoch genauen 3D-Scanner abgetastet und digitalisiert. Das digitale Abbild wird dann in eine virtuelle Hörgeräteschale umgewandelt. Anschließend wird die Schale in einem stereolithographischen Verfahren bzw. in einem Laser-Sinter-Prozess aus einem speziellen Granulat in mehreren Schichten zusammengesetzt. Das für den Hörer benötigte Volumen kann damit bereits bei der Fertigung des Hörgerätegehäuse 2 berücksichtigt werden. Das Hörgerätegehäuse 2 sowie die Befestigungsmittel für den Hörer 1 im Hörgerät, insbesondere eine einen Hohlraum bildende Wand 2A, sind damit einstückig miteinander verbunden und in dem gleichen Herstellungsprozess herstellbar.

Der Hörer 1 weist an seiner Gehäusevorderseite einen Schalldurchlassstutzen 3 auf. Dieser bildet die Schallauslassöffnung 4 des Hörers 1. An der der Gehäusevorderseite des Hörers 1 gegenüberliegenden Gehäuserückseite befindet sich ein Stutzen 5. Dessen äußere Form stimmt im Ausführungsbeispiel mit der äußeren Form des Schalldurchlassstutzens 3 überein. Der Stutzen 5 ist ebenfalls rohrförmig ausgebildet und dient der Durchführung der elektrischen Anschlussleitungen 6 des Hörers 1.

Gemäß der Erfindung sind an der Gehäusevorderseite sowie an der Gehäuserückseite des Hörers 1 elastische Halteelemente 7A bzw. 7B angeordnet. Zur Befestigung mit dem Hörer 1 weisen die elastischen Halteelemente 7A und 7B entsprechend der äußeren Form des Schalldurchlassstutzens 3 bzw. des Stutzens 5 negativ geformte Öffnungen auf, so dass sie in einfacher Weise auf die Stutzen aufgesteckt werden können. Zur zusätzlichen Fixierung dienen an dem Schalldurchlassstutzen 3 sowie an dem Stutzen 5 angeformte Wülste 3A bzw. 5A. Im Ausführungsbeispiel weisen die elastischen Halteelemente 7A und 7B eine identische äußere Form auf, was deren Herstellung vereinfacht und verbilligt.

Dadurch, dass der Schalldurchlassstutzen 3 sowie der Stutzen 5 im Zentrum der Gehäusevorderseite bzw. der Gehäuserückseite angeordnet sind und die elastischen Halteelemente 7A bzw. 7B lediglich über diese mit dem Hörer 1 verbunden sind, ergibt sich eine verhältnismäßig große Distanz zwischen dem Schalldurchlassstutzen 3 bzw. dem Stutzen 5 und der den Hörer 1 umgebenden Wand 2A, an der sich die elastischen Halteelemente 7A und 7B entlang ihres äußeren Randes abstützen. Dies ist zugleich die wirksame Distanz zur Schwingungsdämpfung zwischen dem Hörer 1 und der Wand 2A durch die elastischen Halteelemente 7A und 7B.

Die gesamte Lageranordnung kann so ausgeführt sein, dass der Spalt 8 zwischen dem Hörer 1 und der Wand 2A verhältnismäßig dünn ausgebildet ist und beispielsweise im Bereich einiger weniger Zehntel Millimeter liegt, abhängig von den zu erwartenden Vibrationsamplituden und Fertigungstoleranzen. Durch die Lagerung wird somit nur der minimal erforderliche Platz für den Hörer 1 beansprucht. Weiterhin ist die Montage der Anordnung denkbar einfach. Die elastischen Halteelemente 7A bzw. 7B werden auf den Schalldurchlassstutzen 3 bzw. den Stutzen 5 aufgeschoben und zusammen mit dem Hörer 1 in den durch die Wand 2A gebildeten Hohlraum des Hörgerätes eingeführt. Vorzugsweise weist der Hohlraum einen kreisrunden bzw. rechteckigen Querschnitt auf, vorzugsweise der äußeren Form des Hörers 1 entsprechend. Durch entsprechend diesem Querschnitt ausgebildete elastische Halteelemente 7A und 7B wird somit ein den Hörer 1 umgebendes Volumen luftdicht abgeschlossen. Auch dieser seitliche, luftdichte Abschluss trägt zur Vermeidung von Rückkopplungen bei.

Das elastische Halteelement 7A ist im Ausführungsbeispiel scheibenförmig bis leicht trichterförmig ausgebildet. Durch diese Ausbildung kann auch auf die akustischen Eigenschaften des Hörers 1 eingewirkt werden. Eine Verstärkung dieser trichterförmigen Ausbildung führt zu einer verbesserten Schallübertragung im Hochtonbereich.

Neben der guten Schwingungsdämpfung und der einfachen Montage ergeben sich noch weitere Vorteile im Zusammenhang mit der Erfindung. So kann beispielsweise der bei in einem Hörgerät gelagerten Hörern üblicherweise notwendige Hörerschlauch entfallen. Dies ist ein Schlauch, der auf den Schalldurchlassstutzen aufgeschoben wird und in einer kleinen Öffnung im Hörgerätegehäuse mündet. Statt dessen befindet sich der Schalldurchlassstutzen 3 im Ausführungsbeispiel sehr nahe an der Oberfläche des Hörgerätegehäuses, so dass eine Schallleitung in Form eines Schallschlauches nicht erforderlich ist.

Darüber hinaus steht die gesamte Querschnittsfläche des von dem Hörer 1 beanspruchten Volumens zur Aufnahme von Cerumen zur Verfügung. Somit ist durch die Erfindung auch der Cerumenschutz wesentlich verbessert.

Vorteilhaft ist in dem Ausführungsbeispiel eine Schutzabdeckung 9 vorgesehen, die beispielsweise als einfaches Schutzgitter ausgeführt sein kann. Zur Aufnahme von Cerumen steht dann der Raum zwischen dem Schutzgitter und dem elastischen Halteelement 7A zur Verfügung. Dadurch, dass dieser Raum gegenüber herkömmlichen Lösungen wesentlich vergrößert ist, kann wesentlich mehr Cerumen aufgenommen werden und verstopfungsbedingte Ausfälle treten wesentlich seltener auf. Vorzugsweise ist die Schutzabdeckung 9 lösbar mit dem Hörgerätegehäuse 2 verbunden, so dass diese zu Reinigungszwecken oder zum Austausch des Hörers 1 abgenommen werden kann.

Eine weitere Ausführungsform der Erfindung zeigt Figur 2. Wie das Ausführungsbeispiel gemäß Figur 1, so zeigt auch Figur 2 einen Hörer 10, der an seiner Gehäusevorderseite einen Schalldurchlassstutzen 13 und an seiner Gehäuserückseite einen Stutzen 15 aufweist. Auch auf diese sind jeweils ein elastisches Halteelement 17A bzw. 17B aufgesteckt und mittels Wülsten 13A bzw. 15A fixiert. Anders als im Ausführungsbeispiel gemäß Figur 1 ist der Hörer 10 jedoch von einer Hülse 12 umgeben, an der sich die elastischen Halteelemente 17A bzw. 17B abstützen. An ihrer Vorderseite weist die Anordnung weiterhin eine vordere Abdeckung 19A und an ihrer Rückseite eine hintere Abdeckung 19B auf. Diese Abdeckungen sind jedoch optional und können somit auch weggelassen werden. In der vorderen Abdeckung 19A befindet sich eine Öffnung zur Durchführung eines Schallschlauches 20 und die hintere Abdeckung 19B ist zur Durchführung der elektrischen Anschlussleitungen 16 des Hörers 1 ausgebildet. Hierzu ist ein Loch in der Mitte der hinteren Abdeckung mit einer elastischen Hülse 21 versehen.

Vorzugsweise ist die gesamte Anordnung zu einer durch den Schalldurchlassstutzen 13 und den Stutzen 15 verlaufenden Achse symmetrisch und von kreisrundem oder rechteckigem Querschnitt. Die beiden elastischen Halteelemente 19A und 19B schließen das zwischen den Halteelementen und der Hülse 12 eingeschlossene Volumen luftdicht ab, so dass Rückkopplungen weitgehend vermieden werden. Die Spaltgröße zwischen dem Hörer 10 und der Hülse 12 kann in Abhängigkeit von der zu erwartenden maximalen Vibrationsamplitude und Fertigungstoleranzen verhältnismäßig klein gewählt werden. Die gesamte Anordnung beansprucht daher nur wenig Platz zur Unterbringung in einem Gerät, insbesondere einem Hörhilfegerät.

Vorteilhaft lässt sich die gesamte Einheit des Ausführungsbeispiels gemäß Figur 2 als eine vorgefertigte Baueinheit insgesamt in ein Gerät mit entsprechend ausgebildeten Aufnahmen einsetzen bzw. wieder daraus entfernen. Dies vereinfacht z.B. die Montage eines Hörhilfegerätes bzw. einen Austausch des Hörers im Reparaturfall erheblich.

Die Ausführungsbeispiele zeigen nur einen kleinen Ausschnitt aus einer Vielzahl denkbarer erfindungsgemäßer Lösungen. Ebenso lassen sich die Ausführungsbeispiele problemlos auch auf als Mikrofon ausgebildete elektroakustische Miniaturwandler übertragen. Die Erfindung wird vorzugsweise bei Hörhilfegeräten, wie im Ohr tragbaren Hörgeräten (IdO) oder hinter dem Ohr tragbaren Hörgeräten (HdO) verwendet. Es gibt jedoch eine Vielzahl weiterer Anwendungsmöglichkeiten, beispielsweise Telefone.

Zusammenfassend kann festgehalten werden:
Durch die Erfindung soll eine platzsparende, einfach zu montierende Lagerung eines elektroakustischen Miniaturwandlers (1, 10) geschaffen werden, die zudem gute Dämpfungseigenschaften aufweist. Hierzu schlägt die Erfindung ein erstes sowie ein zweites elastisches Halteelement (7A, 7B, 17A, 17B) vor, wobei das erste elastische Halteelement (7A, 17A) lediglich in einem zentralen Bereich der Gehäusevorderseite und das zweite elastische Halteelement (7B, 17B) lediglich in einem zentralen Bereich der der Gehäusevorderseite gegenüberliegenden Gehäuserückseite an dem Gehäuse des elektroakustischen Miniaturwandlers (1, 10) befestigt ist. Vorzugsweise überragt das erste elastische Halteelement (7A, 17A) den äußeren Rand der Gehäusevorderseite und das zweite elastische Halteelement (7B, 17B) den äußeren Rand der Gehäuserückseite zumindest teilweise. Die Anbringung der elastischen Halteelemente (7A, 7B, 17A, 17B) an der Gehäusevorder- bzw. an der Gehäuserückseite ermöglicht eine einfache Montage, beispielsweise durch einfaches Einschieben des elektroakustischen Miniaturwandlers (1, 10) mit den daran befestigten elastischen Halteelementen (7A, 7B, 17A, 17B) in eine entsprechend geformte Gehäuseöffnung. Dadurch, dass die elastischen Halteelemente (7A, 7B, 17A, 17B) jeweils nur im Zentrum der Gehäusevorder- bzw. Gehäuserückseite befestigt sind, ergibt sich ein verhältnismäßig langer schwingungsdämpfender Bereich der elastischen Halteelemente (7A, 7B, 17A, 17B).

## Patentansprüche

1. Lagerung eines elektroakustischen Miniaturwandlers (1, 10) mit einem Gehäuse und einer in der Gehäusevorderseite angeordneten Schalldurchlassöffnung (4, 14) in einem Gerät, insbesondere in einem Hörhilfegerät, **gekennzeichnet durch** ein erstes sowie ein zweites elastisches Halteelement (7A, 17A; 7B, 17B), wobei das erste elastische Halteelement (7A, 17A) lediglich in einem zentralen Bereich der Gehäusevorderseite und das zweite elastische Halteelement (7B, 17B) lediglich in einem zentralen Bereich der der Gehäusevorderseite gegenüberliegenden Gehäuserückseite an dem Gehäuse des elektroakustischen Miniaturwandlers (1, 10) befestigt ist und wobei sich die elastischen Halteelemente (7A, 17A; 7B, 17B) entlang ihres äußeren Randes entweder direkt an einer in dem Gerät vorhandenen Aufnahme abstützen oder an einer den elektroakustischen Miniaturwandler (1, 10) umgebenden Hülse (12) abstützen und diese Hülse (12) mit einer in dem Gerät vorhandenen Aufnahme verbunden ist.

2. Lagerung nach Anspruch 1, **dadurch gekennzeichnet, dass** das erste elastische Halteelement (7A, 17A) den äußeren Rand der Gehäusevorderseite und/oder das zweite elastische Halteelement (7B, 17B) den äußeren Rand der Gehäuserückseite zumindest teilweise überragt.

3. Lagerung nach Anspruch 1 oder 2, **dadurch gekennzeichnet, dass** die Gehäusevorderseite einen Schalldurchlassstutzen (3, 13) aufweist und das erste elastische Halteelement (7A, 17A) mittels des Schalldurchlassstutzens (3, 13) an dem Gehäuse des elektroakustischen Miniaturwandlers (1, 10) befestigt ist.

4. Lagerung nach einem der Ansprüche 1 bis 3, **dadurch gekennzeichnet, dass** die Gehäuserückseite einen Stutzen (5, 15) aufweist und das zweite elastische Halteelement (7B, 17B) mittels des Stutzens (5, 15) an dem Gehäuse des elektroakustischen Miniaturwandlers (1, 10) befestigt ist.

5. Lagerung nach einem der Ansprüche 3 oder 4, **dadurch gekennzeichnet, dass** der Schalldurchlassstutzen (3, 13) und/oder der Stutzen (5, 15) einen Wulst (3A, 5A, 13A, 15A) zur Fixierung des damit verbundenen elastischen Halteelements (7A, 7B, 17A, 17B) aufweist.

6. Lagerung nach Anspruch 4 oder 5, **dadurch gekennzeichnet, dass** der Stutzen (5, 15) zur Durchführung elektrischer Leitungen (6, 16) rohrförmig ausgebildet ist.

7. Lagerung nach einem der Ansprüche 1 bis 6, **dadurch gekennzeichnet, dass** das erste und/oder das zweite elastische Halteelement (7A, 7B, 17A, 17B) scheibenförmig ausgebildet ist.

8. Lagerung nach einem der Ansprüche 1 bis 6, **dadurch gekennzeichnet, dass** das erste und/oder das zweite elastische Halteelement (7A, 7B, 17A, 17B) trichterförmig ausgebildet ist.

9. Lagerung nach einem der Ansprüche 1 bis 8, **dadurch gekennzeichnet, dass** das erste elastische Halteelement (7A, 17A) und/oder das zweite elastische Halteelement (7B, 17B) und/oder der elektroakustische Miniaturwandler (1, 10) in wenigstens einem rohrförmigen Hohlraum des Gerätes angeordnet ist bzw. sind und das erste elastische Halteelement (7A, 17A) und/oder das zweite elastische Halteelement (7B, 17B) mit wenigstens einer den Hohlraum umgebenden Wand (2A) verbunden ist bzw. sind.

10. Lagerung nach einem der Ansprüche 1 bis 8, **dadurch gekennzeichnet, dass** das erste elastische Halteelement (7A, 17A) und/oder das zweite elastische Halteelement (7B, 17B) und/oder der elektroakustische Miniaturwandler von wenigstens einer rohrförmigen Hülse (12) umgeben ist bzw. sind und das erste elastische Halteelement (7A, 17A) und/oder das zweite elastische Halteelement (7B, 17B) mit der Hülse (12) verbunden ist bzw. sind.

11. Lagerung nach Anspruch 9 oder 10, **dadurch gekennzeichnet, dass** das erste elastische Halteelement (7A, 17A) und das zweite elastische Halteelement (7B, 17B) das Volumen zwischen dem elektroakustischen Miniaturwandler (1, 10) und der den Hohlraum umgebenden Wand (2A) bzw. der Hülse (12) zumindest im Wesentlichen luftdicht abschließen.

12. Lagerung nach einem der Ansprüche 1 bis 11, **dadurch gekennzeichnet, dass** an der Gehäusevorderseite und/oder der Gehäuserückseite des elektroakustischen Miniaturwandlers eine Schutzabdeckung (9, 19A, 19B) vorgesehen ist.

13. Elektroakustischer Miniaturwandler (1, 10) mit einem Gehäuse, ausgebildet zur Lagerung in einem Gerät, insbesondere in einem Hörhilfegerät, nach einem der Ansprüche 1 bis 12, **gekennzeichnet durch** ein erstes sowie ein zweites elastisches Halteelement (7A, 7B, 17A, 17B), wobei das erste elastische Halteelement (7A, 17A) lediglich in einem zentralen Bereich der Gehäusevorderseite und das zweite elastische Halteelement lediglich in einem zentralen Bereich der der Gehäusevorderseite gegenüberliegenden Gehäuserückseite an dem Gehäuse des elektroakustischen Miniaturwandlers (1, 10) befestigt ist, wobei der elektroakustische Miniaturwandler von einer Hülse (12) umgeben ist und wobei sich die elastischen Halteelemente (7A, 17A; 7B, 17B) entlang ihres äußeren Randes an der Hülse (12) abstützen.

## Claims

1. Bearing of a miniature electroacoustic transducer (1, 10) having a housing and a sound passage opening (4, 14) arranged in the front of the housing in a device, in particular in a hearing aid device,
**characterised by**
a first and a second elastic retainer element (7A, 17A; 7B, 17B), with the first elastic retainer element (7A, 17A) being secured to the housing of the miniature electroacoustic transducer (1, 10) only in a central region of the front of the housing, and the second elastic retainer element (7B, 17B) being secured to the housing of the miniature electroacoustic transducer only in a central region of the rear of the housing lying opposite the front of the housing, and with the elastic retainer elements (7A, 17A; 7B, 17B) being supported along their outer edge either directly on a receptacle present in the device or on a sleeve (12) surrounding the miniature electroacoustic transducer (1, 10), and this sleeve (12) being connected to a receptacle present in the device.

2. Bearing according to claim 1,
**characterised in that**
the first elastic retainer element (7A, 17A) projects at least partially beyond the outer edge of the front of the housing and/or the second elastic retainer element (7B, 17B) projects at least partially beyond the outer edge of the rear of the housing.

3. Bearing according to claim 1 or 2,
**characterised in that**
the front of the housing comprises a sound passage connector (3, 13) and the first elastic retainer element (7A, 17A) is secured to the housing of the miniature electroacoustic transducer (1, 10) by means of the sound passage connector (3, 13).

4. Bearing according to one of claims 1 to 3,
**characterised in that**
the rear of the housing comprises a connection piece (5, 15), and the second elastic retainer element (7B, 17B) is secured to the housing of the miniature electroacoustic transducer (1, 10) by means of the connection piece (5, 15).

5. Bearing according to one of claims 3 or 4,
**characterised in that**
the sound passage connector (3, 13) and/or the connection piece (5, 15) comprises a bead (3A, 5A, 13A, 15A) for fixing the elastic retainer element (7A, 7B, 17A, 17B) connected thereto.

6. Bearing according to claim 4 or 5,
**characterised in that**
the connection piece (5, 15) is tubularly fashioned to permit a passage of electrical lines (6, 16).

7. Bearing according to one of claims 1 to 6,
**characterised in that**
the first and/or second elastic retainer element (7A, 7B, 17A, 17B) is fashioned disk-shaped.

8. Bearing according to one of claims 1 to 6,
**characterised in that**
the first and/or second elastic retainer element (7A, 7B, 17A, 17B) is fashioned funnel-shaped.

9. Bearing according to one of claims 1 to 8,
**characterised in that**
the first elastic retainer element (7A, 17A) and/or the second elastic retainer element (7B, 17B) and/or the miniature electroacoustic transducer (1, 10) is arranged in at least one tubular cavity of the device, and/or the first elastic retainer element (7A, 17A) and/or the second elastic retainer element (7B, 17B) is connected to at least one wall (2A) surrounding the cavity.

10. Bearing according to one of claims 1 to 8,
**characterised in that**
the first elastic retainer element (7A, 17A) and/or the second elastic retainer element (7B, 17B) and/or the miniature electroacoustic transducer is surrounded by at least one tubular sleeve (12), and the first elastic retainer element (7A, 17A) and/or the second elastic retainer element (7B, 17B) is connected to the sleeve (12).

11. Bearing according to claim 9 or 10,
**characterised in that**
the first elastic retainer element (7A, 17A) and the second elastic retainer element (7B, 17B) close off the volume between the miniature electroacoustic transducer (1, 10) and the wall (2A) and/or sleeve (12) surrounding the cavity in a substantially airtight fashion.

12. Bearing according to one of claims 1 to 11, **characterised in that** a protective cover (9, 19A, 19B) is provided on the front of the housing and/or the rear of the housing of the miniature electroacoustic transducer.

13. Miniature electroacoustic transducer (1, 10) having a housing embodied to be mounted in a device, in particular in a hearing aid device, according to one of claims 1 to 12,
**characterised by**
a first and a second elastic retainer element (7A, 17A, 7B, 17B), with the first elastic retainer element (7A, 17A) being secured to the housing of the miniature electroacoustic transducer (1, 10) only in a central region of the front of the housing, and the second elastic retainer element being secured to the housing of the miniature electroacoustic transducer only in a central region of the rear of the housing lying opposite the front of the housing, with the miniature electroacoustic transducer being surrounded by a sleeve (12) and with the elastic retainer elements (7A, 17A, 7B, 17b) being supported along their outer edge on the sleeve (12).

## Revendications

1. Dispositif de mise en position d'un transducteur ( 1, 10 ) miniature électroacoustique, ayant un boîtier et une ouverture ( 4, 14 ) de passage du son disposée du côté avant du boîtier, dans un appareil, notamment dans une prothèse auditive, **caractérisé par** un premier ainsi qu'un deuxième élément ( 7A, 17A ; 7B, 17B ) élastique de maintien, le premier élément ( 7A, 17A ) élastique de maintien étant fixé sur le boîtier du transducteur ( 1, 10 ) miniature électroacoustique, seulement dans une partie centrale du côté avant du boîtier et le deuxième élément ( 7B, 17B ) élastique de maintien étant fixé seulement dans une partie centrale du côté arrière du boîtier opposé au côté avant du boîtier et dans lequel les éléments ( 7A, 17A ; 7B, 17B ) élastiques de maintien s'appuient le long de leur bord extérieur, soit directement sur un logement présent dans l'appareil, soit sur un manchon ( 12 ) entourant le transducteur ( 1, 10 ) miniature électroacoustique et ce manchon ( 12 ) communique avec un logement présent dans l'appareil.

2. Dispositif de mise en position suivant la revendication 1, **caractérisé en ce que** le premier élément ( 7A, 17A ) élastique de maintien dépasse au moins en partie du bord extérieur de la partie avant du boîtier et/ou le deuxième élément ( 7B, 17B ) élastique de maintien dépasse au moins en partie du bord extérieur du côté arrière du boîtier.

3. Dispositif de mise en position suivant la revendication 1 ou 2, **caractérisé en ce que** le côté avant du boîtier a une tubulure ( 3, 13 ) de passage du son et le premier élément ( 7A, 17A ) élastique de maintien est fixé au boîtier du transducteur ( 1, 10 ) miniature électroacoustique au moyen de la tubulure ( 3, 13 ) de passage du son.

4. Dispositif de mise en position suivant l'une des revendications 1 à 3, **caractérisé en ce que** le côté arrière du boîtier a une tubulure ( 5, 15 ) et **en ce que** le deuxième élément ( 7B, 17B ) élastique de maintien est fixé au boîtier du transducteur ( 1, 10 ) miniature électroacoustique au moyen de la tubulure ( 5, 15 ) .

5. Dispositif de mise en position suivant l'une des revendications 3 ou 4, **caractérisé en ce que** la tubulure ( 3, 13 ) de passage du son et/ou la tubulure ( 5, 15 ) a un bourrelet ( 3A, 5A, 13A, 15A ) d'immobilisation de l'élément ( 7A, 17B, 17A, 17B ) élastique de maintien, qui y est relié.

6. Dispositif de mise en position suivant l'une des revendications 4 ou 5, **caractérisé en ce que** la tubulure ( 5, 15 ) est constituée de façon tubulaire pour le passage de lignes ( 6, 16 ) électriques.

7. Dispositif de mise en position suivant l'une des revendications 1 à 6, **caractérisé en ce que** le premier et/ou le deuxième éléments ( 7A, 7B, 17A, 17B ) élastiques de maintien sont constitués sous la forme de disque.

8. Dispositif de mise en position suivant l'une des revendications 1 à 6, **caractérisé en ce que** le premier et/ou le deuxième éléments ( 7A, 7B, 17A, 17B ) élastiques de maintien sont constitués sous la forme d'un entonnoir.

9. Dispositif de mise en position suivant l'une des revendications 1 à 8, **caractérisé en ce que** le premier élément ( 7A, 17A ) élastique de maintien et/ou le deuxième élément ( 7B, 17B ) élastique de maintien et/ou le transducteur ( 1, 10 ) miniature électroacoustique est ou sont disposés dans une cavité tubulaire de l'appareil et le premier élément ( 7A, 17A ) élastique de maintien et/ou le deuxième élément ( 7B, 17B ) élastique de maintien est ou sont reliés à au moins l'une des parois ( 2A ) entourant la cavité.

10. Dispositif de mise en position suivant l'une des revendications 1 à 8, **caractérisé en ce que** le premier élément ( 7A, 17A ) élastique de maintien et/ou le deuxième élément ( 7B, 17B ) élastique de maintien et/ou le transducteur ( 1, 10 ) miniature électroacoustique est ou sont entourés d'au moins un manchon ( 12 ) tubulaire et le premier élément ( 7A, 17A ) élastique de maintien et/ou le deuxième élément ( 7B, 17B ) élastique de maintien est ou sont reliés au manchon ( 12 ).

11. Dispositif de mise en position suivant la revendication 9 ou 10, **caractérisé en ce que** le premier élément ( 7A, 17A ) élastique de maintien et le deuxième élément ( 7B, 17B ) élastique de maintien ferment au moins d'une manière sensiblement étanche à l'air le volume compris entre le transducteur ( 1, 10 ) miniature électroacoustique et la paroi ( 2A ) entourant la cavité ou le manchon ( 12 ).

12. Dispositif de mise en position suivant l'une des revendications 1 à 11, **caractérisé en ce qu'**il est prévu sur le côté avant du boîtier et/ou sur le côté arrière du boîtier du transducteur miniature électroacoustique un recouvrement ( 9, 19A, 19B ) de protection.

13. Transducteur ( 1, 10 ) miniature électroacoustique ayant un boîtier constitué pour être mis en position dans un appareil, notamment dans une prothèse auditive suivant l'une des revendications 1 à 12, **caractérisé par** un premier ainsi qu'un deuxième élément ( 7A, 7B, 17A, 17B ) élastique de maintien, le premier élément ( 7A, 17A ) élastique de maintien étant fixé seulement dans une partie centrale du côté avant du boîtier et le deuxième élément élastique de maintien étant fixé seulement dans une partie centrale du côté arrière du boîtier opposé au côté avant du boîtier au boîtier du transducteur ( 1, 10 ) miniature électroacoustique, le transducteur miniature électroacoustique étant entouré d'un manchon ( 12 ) et les éléments ( 7A, 17A ; 7B, 17B ) élastiques de maintien s'appuyant le long de leur bord extérieur sur le manchon ( 12 ) .
